# FASCICULE DE BREVET EUROPEEN

(11) **EP 1 938 556 B1**
(45) Date de publication et mention de la délivrance du brevet: **08.09.2010**
(21) Numéro de dépôt: 06831238.8
(22) Date de dépôt: 27.09.2006
(51) Int. Cl.: H04L 29/06

(54) **DIFFUSION SANS TELECHARGEMENT DE DOCUMENTS MULTIMEDIAS NUMERIQUES SUR UN RESEAU DE TELECOMMUNICATIONS**
STREAMING-VERTEILUNG DIGITALER MULTIMEDIA-DOKUMENTE ÜBER EIN TELEKOMMUNIKATIONSNETZWERK
STREAMING DISTRIBUTION OF MULTIMEDIA DIGITAL DOCUMENTS VIA A TELECOMMUNICATION NETWORK

(30) Priorité: 30.09.2005 FR 0552982
(43) Date de publication de la demande: 02.07.2008
(73) Titulaire: FRANCE TELECOM, 75015 Paris (FR)
(72) Inventeur: BAILLOUX, Sandrine, F-14210 Noyers-Bocage (FR); REBILLON, Jacques-Olivier, F-14220 Mutrecy (FR); NORMAND, Olivier, F-14610 Fontaine-Henry (FR)
(86) Numéro de dépôt international: PCT/FR2006/050951
(87) Numéro de publication internationale: WO 2007/039693

(56) Documents cités:
- WO-A-2005/024827
- WO-A-2005/050993
- US-A1- 2004 098 748

## Description

Le domaine de l'invention est celui de l'accès et de la consultation à distance de contenus multimédias mis à disposition par des serveurs de diffusion sur un réseau de télécommunications.

En particulier, l'invention concerne le domaine des livres audio (ou livres sonores), se présentant sous la forme d'un ou de plusieurs fichiers numériques destinés à être écoutés par un utilisateur sur son terminal d'écoute. L'invention s'applique cependant à tout type de fichiers numériques audibles, dont le contenu correspond par exemple à une oeuvre parlée, chantée ou simplement musicale.

Plus précisément, l'invention concerne un système de fourniture de documents multimédias numériques sur un réseau de télécommunications, comprenant des moyens serveurs de documents, adaptés à fournir, en mode *streaming* de tels documents à des terminaux d'utilisateurs connectés au réseau.

Dans le cadre de la présente invention, on entend par transmission en mode "streaming" la diffusion sans téléchargement de contenus multimédias, le plus souvent compressés, et leur lecture en temps réel par le terminal destinataire, c'est-à-dire en même temps que la réception du contenu dans le terminal.

Par ailleurs, dans le contexte de l'invention, une oeuvre parlée peut correspondre à une version écoutable/audible d'un livre, d'un article de presse, d'une émission radiophonique, d'une pièce de théâtre, de magazines spécialisés, de notices techniques telles que les instructions de montage d'un objet livré en kit, de revues de jardinage, de recettes de cuisine, de dictionnaires généraux ou spécifiques, des outils documentaires d'aide, etc. De telles « oeuvres » sont lues et enregistrées dans un format numérique, directement par leur auteur ou bien par un interprète, ou peuvent encore être synthétisées au moyen de technologies dédiées, telles que celle connue sous la marque *Text To Speech.*

A titre d'exemple, l'invention s'applique aussi à des fichiers numériques contenant des enregistrements de concerts de musique commentés, ou d'émissions radiophoniques proposant des contenus parlés, chantés et musicaux.

Dans des réseaux de télécommunication tel que l'Internet, il existe actuellement des services de fourniture, par téléchargement, de documents numériques contenant des textes enregistrés (livres, articles, ...). Typiquement, pour bénéficier d'un tel service, l'utilisateur doit d'abord souscrire auprès d'un site de commerce électronique une formule d'abonnement le plus souvent payante.

Ainsi, de manière classique, un utilisateur qui souhaite écouter un livre audio de son choix se connecte d'abord à un site Internet fournisseur de contenus numériques audio au moyen par exemple d'un ordinateur de type PC, ou d'un assistant numérique personnel (PDA) ; puis il s'identifie auprès de ce site afin que ses droits d'accès et de téléchargement soit vérifiés en cohérence avec la formule d'abonnement qu'il a préalablement souscrite, ou bien après validation de sa commande et/ou du paiement de cette dernière, s'il n'a pas souscrit d'abonnement. Une fois identifié/authentifié par le site Internet, l'utilisateur peut ensuite accéder à une liste de documents audio - par exemple, journaux, émissions de radio - qu'il peut sélectionner puis télécharger sur son terminal au travers de sa connexion réseau.

La société Audible Inc., bien connue dans le domaine de la fourniture de livres audio, offre aujourd'hui à ses clients un service d'abonnement en ligne pour télécharger tous types de contenus audio parlés.

Le principe de l'offre de la société Audible repose ainsi sur le téléchargement payant du ou des fichiers numériques correspondant au document audio désiré par l'utilisateur, connecté au site Web de ladite société, au moyen par exemple d'une connexion bas débit (modem) ou d'une connexion ADSL.

Une fois le ou les fichiers numériques audio téléchargés dans un format préalablement sélectionné par l'utilisateur, ces derniers pourront alors être gravés sur un disque compact numérique (CD-ROM), ou bien chargés sur un lecteur compatible avec le format numérique des fichiers téléchargés, par exemple un lecteur du type MP3, MP4, ou bien encore être écoutés directement depuis un lecteur matériel et/ou logiciel.

Un inconvénient majeur des solutions actuellement proposées par les fournisseurs de contenus audibles, tel la société Audible Inc., est lié au fait qu'elles imposent un téléchargement complet d'un gros volume de données numériques, fortement consommateur de temps, et fortement consommateur d'espace mémoire sur le terminal devant stocker les fichiers téléchargés.

Pour illustrer cet inconvénient, un livre audio comprenant par exemple 300 pages en format poche (papier), représente environ sept CD-ROM pour environ huit heures d'écoute, dans un format non compressé, et 700 méga octets de mémoire au format compressé MP3. D'autre part, cet ouvrage représente environ soixante-dix heures de téléchargement avec une connexion Internet bas débit 56kbs (kilobits par seconde).

Par ailleurs, les contraintes de téléchargement (durée, espace mémoire) précitées sont incompatibles avec l'utilisation de terminaux dits "légers" car ne disposant que d'une capacité limitée de mémoire, ou bien avec une utilisation en mode nomade, au moyen d'un terminal de télécommunication mobile, tel qu'un téléphone cellulaire connecté à un réseau de type GPRS, UMTS ou tout autre type de réseau de télécommunication.

Un autre inconvénient des solutions actuelles concerne la navigation dans un livre audio téléchargé. En effet, une fois les documents téléchargés et stockés sur le disque dur ou dans la mémoire du terminal utilisateur, de type PC par exemple, les outils de lecture de ces documents n'autorisent qu'une lecture de type en continu, ce qui implique des difficultés de reprise ultérieure de la lecture depuis l'emplacement du document correspondant à l'interruption d'une lecture précédente. L'utilisateur est donc contraint, avant de pouvoir reprendre son écoute à l'endroit où il l'avait interrompue, de déterminer approximativement l'endroit d'interruption du document considéré, par exemple en utilisant son dispositif de lecture dans un mode accéléré, ou bien en déplaçant un curseur graphique d'avancement de la lecture jusqu'à un point estimé d'une interface graphique représentative de la durée de lecture du document.

Pour améliorer la navigation dans un document numérique audible préalablement téléchargé, une norme d'encodage et de navigation connue sous l'acronyme DAISY (*Digital Accessible Information System,* en anglais), a été créée. Il s'agit d'un standard d'enregistrement pour des fichiers numériques audibles, qui peut s'appliquer aux livres numériques audio.

Le standard DAISY a été conçu à l'origine dans l'objectif d'apporter un niveau de confort accru aux personnes déficientes visuellement en leur permettant un accès plus facile aux fichiers numériques audibles et une navigation sonore simplifiée dans ces derniers. A cet effet, DAISY propose un lecteur dédié implémentant la norme. DAISY permet en particulier de pouvoir naviguer selon des notions spécifiques aux livres : navigation de page en page, de paragraphe en paragraphe, de chapitre en chapitre, de phrase en phrase, à l'instar de la manipulation d'un livre au format papier.

Cependant, si les fichiers numériques audibles au format DAISY sont compatibles avec des fonctionnalités de navigation plus conviviales, particulièrement bien adaptées aux attentes d'un utilisateur de livres audio, ils ont pour inconvénient de nécessiter encore plus de capacité de stockage qu'un livre audio de format plus classique (MP3 par exemple). Pour cette raison, les documents numériques audio au format DAISY sont le plus souvent commercialisés au format CD-ROM ou DVD-ROM. De tels documents sont par conséquent incompatibles avec un téléchargement auprès d'un fournisseur de livres audio, et/ou avec un stockage sur un terminal client léger.

Le document brevet WO 2005/050993 décrit un système de diffusion de contenus à la demande (*on demand server*)*,* comprenant des moyens pour fournir des flux audio et/ou vidéo, et pour insérer des marqueurs dans ces flux de données, ces marqueurs indiquant une position dans le flux de données considéré. Le système exposé comprend en outre des moyens pour recevoir, en provenance d'un boîtier décodeur (*set top* box), un marqueur associé à un flux audio/vidéo considéré pour lequel le boîtier décodeur a suspendu ou interrompu la lecture, et pour reprendre la diffusion du flux audio/vidéo vers le boîtier décodeur depuis une position proche du marqueur, en réponse à un signal reçu du boîtier décodeur.

La présente invention a notamment pour but de pallier les inconvénients précités de l'état de la technique. Un objectif de l'invention est par conséquent de fournir une solution technique permettant à un utilisateur d'écouter et d'interagir avec un contenu multimédia, tel qu'un livre audio, sans téléchargement préalable, complet ou partiel, du ou des fichiers numériques correspondants, et sans nécessiter une capacité de stockage importante sur le terminal client utilisé.

Un autre objectif de l'invention est d'offrir une telle solution qui autorise un accès nomade à des contenus textuels audio mis à disposition par un fournisseur d'ouvrages à écouter, au moyen par exemple d'un terminal mobile disposant d'un accès réseau, même bas débit.

Un objectif supplémentaire de l'invention consiste à fournir une telle solution technique qui autorise une interaction aisée avec le contenu du ou des fichiers numériques sonores correspondant aux oeuvres multimédias à lire.

Un autre objectif de l'invention est de fournir une telle solution technique qui permette à un utilisateur de reprendre l'écoute de n'importe quelle oeuvre audio exactement à l'endroit où elle a été précédemment interrompue soit volontairement, soit involontairement.

Un autre objectif de l'invention est de fournir une telle solution technique qui permette à un utilisateur de suspendre son écoute d'un fichier numérique audible, puis de reprendre celle-ci ultérieurement tout en bénéficiant de fonctionnalités de navigation à l'intérieur du fichier numérique, reproduisant celles habituellement mises en oeuvre par l'utilisateur, lorsqu'il utilise une version papier du document (retour arrière et avance rapide par phrase, paragraphe, chapitre etc.).

Un objectif supplémentaire de l'invention consiste à offrir une telle technique qui puisse être utilisée depuis tout type de terminal client en local ou bien à distance, avec la même ergonomie et la même qualité de service, tout en autorisant un début de lecture sur un premier terminal et la poursuite de celle-ci depuis un point d'interruption précédemment défini, sur un autre terminal, quel que soit le réseau de télécommunication utilisé.

En d'autres termes, un objectif global de l'invention consiste à fournir une solution technique d'accès, d'écoute et de manipulation d'un ou plusieurs fichiers numériques sonores, au cours de leur réception en mode streaming, qui soit indépendante du terminal d'écoute et de la connexion réseau utilisés.

Pour répondre aux objectifs précités, la présente invention a pour objet, selon un premier aspect, un système de fourniture de documents multimédias numériques sur un réseau de télécommunications

selon la revendication 1.

Ainsi, à titre d'exemple, la transmission d'un document vers un terminal utilisateur pourra être déclenchée depuis une valeur d'index préalablement mémorisée lors de l'interruption d'une transmission précédente du document vers le même terminal. Cette valeur d'index que l'on peut qualifier dans cet exemple de "reprise de transmission", correspondra alors à la portion du document qui était en cours de transmission au moment de cette interruption. Une telle interruption de la transmission peut survenir par exemple après une interruption volontaire de la lecture par l'utilisateur du terminal en question, ou bien après une coupure de la connexion réseau entre le terminal et le serveur de contenus.

L'invention peut s'appliquer à tout type de contenu numérique multimédia, audio et/ou image, par exemple, pouvant être consulté en mode streaming. En particulier, l'invention s'avère particulièrement pertinente dans le cadre de la consultation en mode streaming, de contenus textuels audibles, tels que des livres numériques audio.

Selon une caractéristique préférée de l'invention, les moyens serveurs incluent en outre une base de données d'utilisateurs, contenant pour chaque utilisateur, des informations d'utilisateurs incluant la liste des références de tous les documents pour lesquels l'utilisateur considéré a des droits de lecture, et pour chaque référence de document de ladite liste, au moins une valeur d'index de lecture correspondant à la portion du document qui était en cours de transmission au moment de la dernière interruption de lecture dudit document pour l'utilisateur considéré ; les moyens de déclenchement de transmission précités étant aptes à déclencher la transmission d'un document quelconque du serveur de contenus, vers un terminal utilisateur, depuis une portion de ce document repérée par une telle valeur d'index de lecture mémorisée dans la base de données d'utilisateurs, pour l'utilisateur et le document considérés.

Une telle interruption de lecture peut être provoquée par toute action volontaire de l'utilisateur sur son terminal client, visant à interrompre la lecture du contenu textuel audible. Il peut s'agir, par exemple, de l'appui d'une touche sur le terminal utilisateur, ou de l'utilisation d'une fonctionnalité de l'interface de lecture du terminal telle que la création d'un signet électronique. Une telle interruption peut être également indépendante de la volonté de l'utilisateur, par exemple dans le cas d'une coupure réseau ou d'une panne matérielle ou logicielle du terminal utilisateur.

Selon un mode de réalisation de l'invention, les moyens serveurs de documents incluent des moyens de mise à jour périodique de la valeur d'index associée à un document quelconque du serveur de contenus cette mise à jour ayant lieu à intervalles de temps au cours de la transmission du document vers un terminal utilisateur. De cette façon, en cas d'interruption de la transmission d'un document par les moyens serveurs ou de la lecture du document par un terminal utilisateur, la dernière valeur d'index de lecture mémorisée, avant l'interruption, dans la base de données d'utilisateurs pour l'utilisateur et le document considérés, pourra être utilisée lors d'une retransmission ultérieure du document depuis la portion du document repérée par cette valeur d'index.

Selon une caractéristique avantageuse de l'invention, l'index de lecture associé à un document quelconque du serveur de contenus, inclut des données de navigation décrivant l'organisation du contenu dudit document en un ensemble prédéfini de sous-parties, l'interface de lecture équipant chaque terminal utilisateur, comprenant :
- des moyens pour traiter et présenter à l'utilisateur les données de navigation associées à un document donné du serveur de contenus ;
- des moyens pour générer une requête de lecture d'un document, à destination des moyens serveurs de documents, la requête de lecture incluant la référence d'un document à lire, et pouvant inclure en outre une information de choix de navigation, déterminée à partir des données de navigation associées au document, ladite information de choix de navigation indiquant une sous-partie du document, choisie par l'utilisateur du terminal considéré et à partir de laquelle la lecture du document doit être déclenchée.

Selon une caractéristique de réalisation particulière, l'information de choix de navigation contenue dans une requête de lecture inclut la valeur de l'index de lecture du document, correspondant à la sous-partie choisie du document, cette valeur d'index étant déterminée par l'interface de lecture du terminal considéré à partir des données de navigation du document.

Selon une variante de réalisation, les moyens de détermination d'index inclus dans les moyens serveurs de documents, sont aptes à déterminer, à partir de l'information de choix de navigation contenue dans une requête de lecture d'un document, la valeur de l'index de lecture du document, qui correspond à la sous-partie choisie du document.

Selon un autre mode de réalisation de l'invention, dans lequel un terminal utilisateur quelconque est un terminal de type téléphonique à accès vocal, connecté à un réseau de téléphonie, ledit système de fourniture de documents conforme à l'invention comprend en outre :
- un serveur vocal, constituant l'interface de lecture du terminal utilisateur et étant accessible sur le réseau de téléphonie ; et
- un serveur d'adaptation assurant l'interconnexion entre ledit serveur vocal et un réseau de type Internet auquel sont reliés les moyens serveurs de documents multimédias, pour assurer l'adaptation des échanges selon les protocoles de communication respectifs utilisés, entre le serveur vocal sur le réseau de téléphonie et les moyens serveurs de documents sur le réseau de type Internet.

Le système de fourniture de documents selon l'invention tel que brièvement exposé supra, s'applique avantageusement à la fourniture de livres audio numériques, dont le contenu est organisé en un ensemble de sous-parties du type défini par l'organisation caractéristique du contenu d'un livre papier.

Selon un second aspect, l'invention a pour objet un terminal utilisateur connectable à un réseau de télécommunications, remarquable en ce qu'il comprend une interface de lecture adaptée à l'utilisation du terminal dans un système de fourniture de documents tel que brièvement défini supra. Selon l'invention, cette interface de lecture comprend :
- des moyens pour traiter et présenter à l'utilisateur des données de navigation associées à un document donné du serveur de contenus ;
- des moyens pour générer une requête de lecture d'un document, à destination des moyens serveurs de documents, la requête de lecture incluant la référence d'un document à lire, et pouvant inclure en outre une information de choix de navigation déterminée à partir des données de navigation associées au document, cette information de choix indiquant une sous-partie du document choisie par l'utilisateur du terminal considéré, et à partir de laquelle la lecture du document doit être déclenchée.

Selon un mode de réalisation préféré, cette interface de lecture est réalisée sous la forme d'un programme informatique résidant dans le terminal utilisateur, ou pouvant être téléchargé sur le réseau de télécommunications, à partir des moyens serveurs de documents numériques multimédias, lors d'une connexion du terminal aux moyens serveurs, par exemple au moyen d'un logiciel de type navigateur Internet. Par conséquent, la présente invention a aussi pour objet un tel programme informatique d'interface de lecture.

Selon un troisième aspect, la présente invention concerne un procédé de lecture en temps reel d'un document numérique multimédia par un terminal utilisateur, le document étant fourni par un système de fourniture de documents en conformité avec l'invention, tel que brièvement exposé plus haut, ce procédé étant remarquable en ce qu'il comporte les étapes suivantes :
- sélection d'un document à lire dans le terminal utilisateur ;
- obtention de données de navigation associées au document sélectionné ;
- sélection d'une sous-partie du document en fonction des données de navigation et génération d'une information de choix de navigation représentant la sous-partie sélectionnée ;
- création d'une requête de lecture incluant la référence du document sélectionné pour la lecture et l'information de choix de navigation, et envoi de la requête aux moyens serveurs de documents sur le réseau ;
- réception du document sélectionné, depuis la sous-partie du document déterminée par les moyens serveurs de documents à partir de l'information de choix de navigation, et lecture simultanée du document.

Les avantages liés à ce terminal et à ce procédé de lecture sont identiques à ceux, brièvement exposés plus haut, relatifs au système de fourniture de documents, selon l'invention.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la FIGURE 1 illustre, selon un premier mode de réalisation, d'une part, l'architecture d'un système selon l'invention de fourniture de documents numériques multimédias, dans lequel les terminaux utilisateurs sont des terminaux de type IP connectés à un réseau de type Internet, et d'autre part, le processus général de lecture d'un contenu multimédia par un terminal IP selon cette architecture ;
- la FIGURE 2 illustre un exemple de processus d'interaction entre l'utilisateur d'un terminal IP et un contenu multimédia obtenu dans un système de fourniture de documents selon le premier mode de réalisation ;
- la FIGURE 3 illustre, selon un second mode de réalisation, d'une part l'architecture d'un système de fourniture de documents selon l'invention, dans lequel les terminaux utilisateurs sont des terminaux de type téléphonique à accès vocal, et d'autre part, le processus général de lecture d'un contenu multimédia par un tel terminal à accès vocal, selon cette architecture ;
- la FIGURE 4 illustre un exemple de processus d'interaction entre l'utilisateur d'un terminal d'accès vocal et un contenu multimédia obtenu dans un système de fourniture de documents selon le second mode de réalisation.

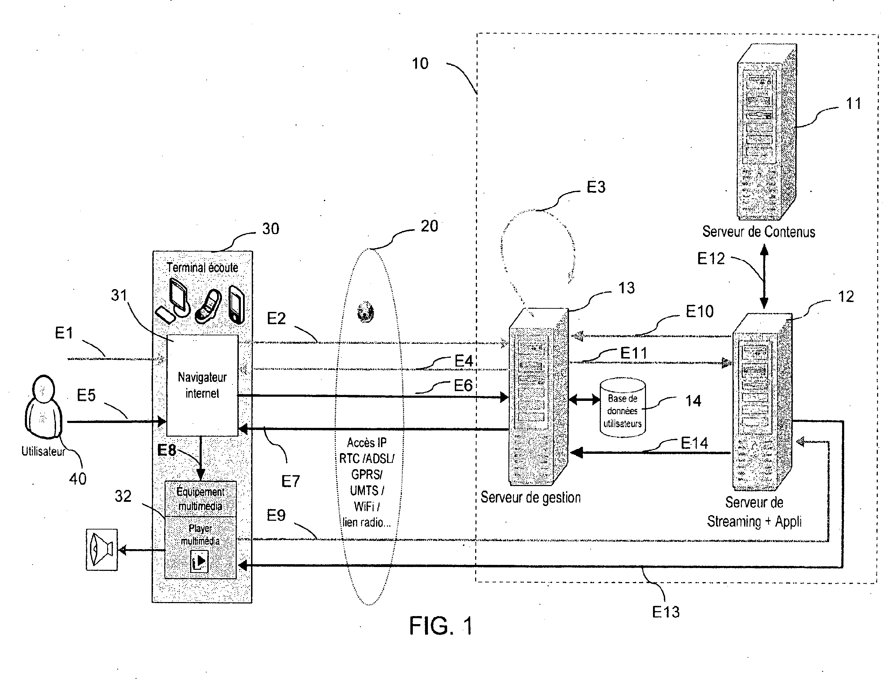

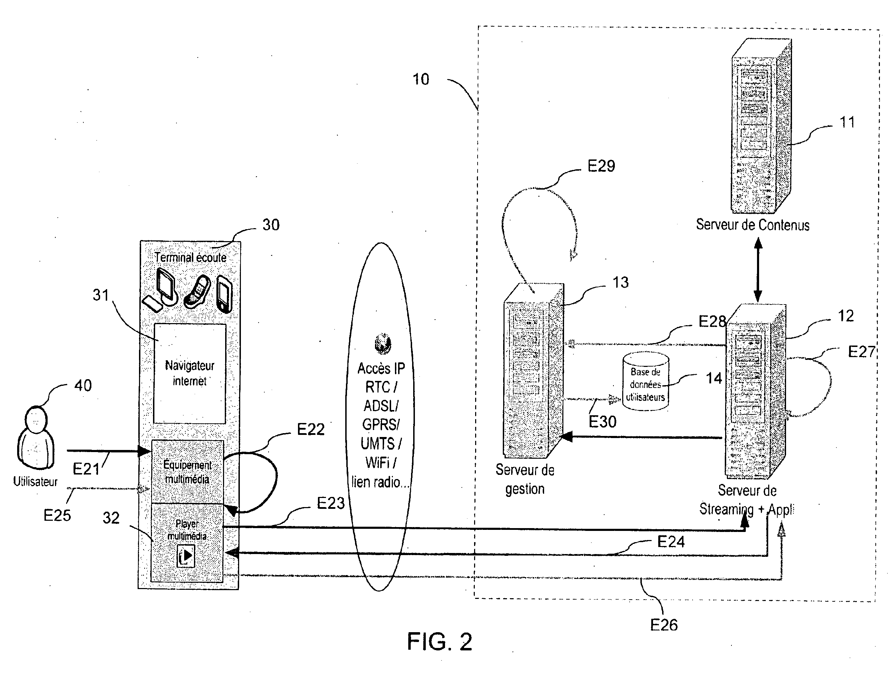

En liaison avec les **figures 1** **et** **2****,** on va décrire à présent un système de fourniture de documents numériques multimédias, selon un premier mode de réalisation de l'invention dans lequel le réseau de télécommunications est un réseau de type Internet et les terminaux utilisateurs sont des terminaux de type IP (*Internet Protoco*/).

Comme représenté à la **figure 1****,** le système de fourniture de documents multimédias selon l'invention comprend un serveur de documents, portant la référence 10, fournissant l'accès a des documents multimédias selon un mode de transmission de type streaming au travers d'un réseau de télécommunications 20, à des terminaux utilisateurs 30 connectés au réseau.

Le réseau 20 est dans cet exemple un réseau de type Internet, ou bien un réseau d'accès à l'Internet, par exemple de type GSM ou UMTS, relié au réseau Internet.

Des terminaux utilisateurs 30 reliés au réseau 20 par des moyens classiques de connexion, en fonction de la nature du terminal utilisateur considéré.

Dans l'exemple représenté à la figure 1, les terminaux utilisateurs considérés sont des terminaux de type IP, c'est-à-dire des terminaux pouvant être connectés au réseau Internet directement ou par l'intermédiaire d'un réseau ou d'un équipement d'accès à l'Internet. Ainsi, un terminal utilisateur de type IP (Internet Protocol) peut être constitué d'un ordinateur personnel muni d'un modem (RTC ou ADSL), ou connecté à une passerelle domestique connectée à l'Internet. Un tel terminal peut être aussi un terminal de téléphonie fonctionnant en mode GPRS ou UMTS, ou un assistant numérique personnel (PDA) relié à un point d'accès Wi-Fi.

Chaque terminal utilisateur 30 comporte une interface (31, 32) de lecture, en mode streaming, de documents multimédias obtenus sur le réseau 20. Dans l'exemple choisi et représenté aux figures 1 et 2, cette interface de lecture est constituée d'un navigateur Internet 31 classique, associé à une application logicielle 32 constituant l'interface de lecture à proprement parlé et adaptée à lire en mode streaming des documents numériques multimédias en provenance du serveur 10 de documents.

Dans les exemples de réalisation choisis et illustrés par les figures des dessins annexés, le serveur 10 de documents est constitué de trois sous-ensembles:
- Un serveur 13 de gestion, qui assure en particulier la gestion des comptes clients et des sessions de lecture des utilisateurs clients. Il a aussi pour tâche de gérer une base de données 14 d'utilisateurs dont le contenu sera précisé plus bas. Le serveur de gestion assure également le contrôle des droits d'accès et de lecture des utilisateurs (authentification).
- Un serveur 11 de contenus multimédias numériques stockant les documents offerts à la diffusion, chaque document pouvant être constitué de plusieurs fichiers.
- Un serveur 12 de transmission en mode streaming (ci-après désigné par "serveur de streaming") assurant la transmission proprement dite à la demande, selon des protocoles de communication supportant le mode streaming, de documents stockés dans le serveur 11 de contenus.

Bien sûr, les serveurs 11, 12 et 13 peuvent être réunis physiquement en une seule machine serveur sur le réseau.

Selon l'invention, chacun des documents multimédias stockés dans le serveur 11 de contenus est associé à un index de lecture dont chaque valeur repère une portion prédéterminée du document. On entend ici par "portion", un endroit particulier dans le document considéré ou bien une sous-partie ou segment particulier du document pris dans sa dimension linéaire de lecture (entre le début et la fin du document).

Selon un mode de réalisation particulier, l'index de lecture associé à chaque document, est constitué de ou inclut un index temporel, c'est-à-dire un index dont les valeurs mesurent la durée de transmission écoulée depuis le début du document considéré. Dans ce cas, une valeur de l'index correspond à une valeur numérique exprimée dans une unité de temps prédéfinie, par exemple la milliseconde (ms). A titre d'exemple, l'index de lecture d'un livre numérique audio de durée de lecture égale à 1 heure, sera constitué de 3 600 001 valeurs comprises entre 0 ms (le début du document) et 3 600 000 ms (la fin du document).

Selon un mode de réalisation particulier de l'invention, l'index de lecture d'un document est généré "à la volée" dans le serveur de streaming, par exemple lors de la transmission du document vers un terminal client.

Selon l'invention l'index de lecture associé à un document quelconque du serveur de contenus, inclut des données de navigation décrivant l'organisation du contenu du document considéré en un ensemble prédéfini de sous-parties.

Si l'on considère le domaine des livres numériques audio, les données de navigation représentent l'organisation du document selon le type défini par l'organisation typique du contenu d'un livre papier, c'est-à-dire une organisation hiérarchique du type : parties, chapitres, pages, paragraphes, phrases, mots...

En pratique, on peut réaliser un tel index en associant à certaines valeurs de l'index temporel de lecture des balises textuelles et/ou numériques (*tags* en anglais) indiquant le début et/ou la fin d'une sous-partie prédéfinie du document, par exemple, la balise '1 ; 52 ; 3 ; 5' pourrait repérer le 5^{ème} mot, de la 3^{ème} phrase, du 52^{ème} paragraphe, du 1^{er} chapitre, du document.

On notera ici que l'index de lecture peut être constitué uniquement d'un index de type balises (tags) sans aucune notion de durée écoulée depuis le début de la lecture.

De retour à la figure 1, le serveur 13 de gestion comporte une base de données 14 d'utilisateurs. Selon l'invention, la base de données 14 d'utilisateurs contient, pour chaque utilisateur enregistré comme client du service de diffusion de documents, des informations d'utilisateurs qui incluent, d'une part, la liste des références de tous les documents pour lesquels l'utilisateur considéré a des droits de lecture, et d'autre part, pour chaque référence de document de cette liste de références, au moins une valeur d'index de lecture du document. Cette valeur d'index mémorisée, si elle n'est pas nulle ou vide, est une valeur d'index du document obtenue lors d'une interruption d'une lecture précédente du document par l'utilisateur. Cette valeur d'index repère par conséquent la portion du document qui était en cours de transmission au moment de cette interruption de lecture.

Les valeurs d'index mémorisées pour un utilisateur et un document donnés peuvent correspondre également à des signets électroniques déposés électroniquement par l'utilisateur. La nature (signet, valeur d'interruption etc.) d'une valeur d'index mémorisée dans la base de données est précisée par exemple par une information spécifique ou un champ particulier dans la base de données.

De manière à obtenir les valeurs d'index de lecture précitées, c'est-à-dire celles mémorisées dans la base 14 de données d'utilisateurs, le serveur 12 de streaming comporte un module de détermination d'index, en pratique un module logiciel, destiné à déterminer à un instant donné, au cours de la transmission vers un terminal utilisateur d'un document quelconque du serveur de contenus, la valeur de l'index de lecture, dite valeur d'index courante, correspondant à la portion du document en cours de transmission à cet instant.

Plus précisément, le module de détermination d'index détermine de manière périodique, c'est-à-dire à intervalles de temps réguliers, cette valeur d'index courante, au cours de la transmission du document considéré vers un terminal utilisateur. Chaque valeur d'index courante déterminée est alors envoyée par le serveur 12 de streaming au serveur 13 de gestion. Ce dernier effectue alors la mise à jour d'un champ dédié de la base de données 14 d'utilisateurs, qui correspond à l'utilisateur et au document concernés, avec la dernière valeur d'index courante reçue du serveur de streaming.

De cette façon, en cas d'interruption volontaire ou involontaire de la lecture d'un document par un terminal utilisateur, la dernière valeur d'index de lecture mémorisée dans la base de données 14 pour l'utilisateur et le document concernés, pourra servir de valeur d'index de lecture de début de transmission du document, lors d'une reprise ultérieure de la lecture du document par cet utilisateur.

A cet effet, selon l'invention, le serveur 12 de streaming est adapté à déclencher la transmission, vers un terminal utilisateur, d'un document obtenu au préalable du serveur 11 de contenus, depuis une portion du document déterminée par une valeur d'index de lecture obtenue au préalable par le module de détermination d'index. Cette valeur d'index de lecture est obtenue à partir des informations enregistrées dans la base de données 14 d'utilisateurs, pour l'utilisateur et le document en question.

Comme mentionné plus haut, selon un mode de réalisation préféré de l'invention, l'index de lecture associé à un document quelconque du serveur 11 de contenus, inclut des données de navigation décrivant l'organisation du contenu dudit document en un ensemble prédéfini de sous-parties.

Selon une mise en oeuvre particulière de l'invention, les données de navigation associées à un document particulier, sont envoyées avec le document lui-même lorsque le document est en cours de lecture dans le terminal utilisateur considéré. Ces données de navigation peuvent être également téléchargées lors de la sélection par l'utilisateur 40 d'un document à lire parmi une liste de documents, au cours de l'initialisation par l'utilisateur 40 d'une session de lecture, via le navigateur Internet 31 pointant sur une page web du site Internet offrant le service de diffusion de documents selon l'invention.

De façon à pouvoir exploiter ces données de navigation, l'interface de lecture (31, 32) équipant chaque terminal utilisateur 30, comprend des moyens pour traiter et présenter à l'utilisateur les données de navigation associées à un document donné du serveur de contenus. Ces données sont par exemple représentées graphiquement au moyen d'un écran de visualisation (non représenté sur les figures) équipant le terminal utilisateur.

Selon un exemple de réalisation, l'interface de lecture d'un terminal utilisateur comprend des fonctionnalités de navigation, représentées graphiquement ou réalisées sous forme de touches physiques, parmi lesquelles :
- commande de pause de lecture ;
- commande de dépôt de signet électronique, permettant de reprendre ultérieurement la lecture du document considéré à partir de la portion du document repérée par le signet (il s'agit alors d'une valeur particulière de l'index de lecture) ;
- commandes d'accès direct à des sous-parties du document, telles que phrases, paragraphes, chapitres, ou signets déjà mémorisés pour le document considéré ;
- commande de sélection d'un document, dans une liste accessible auprès du service en ligne de diffusion de documents.
- etc.

Chaque commande activée par l'utilisateur est ensuite traduite en une requête correspondante, par l'interface de lecture du terminal considéré, à destination du serveur de streaming 12 qui exécute alors la commande en question. Par exemple, si la commande est une commande de dépôt de signet électronique; la valeur de l'index de lecture associée à la commande dans la requête, est envoyée au serveur de gestion 13 afin d'être mémorisée dans un champs dédié (signets utilisateur) de la base de données 14 d'utilisateurs, pour l'utilisateur et le document concernés.

Selon l'invention, l'interface utilisateur (31,32) d'un terminal utilisateur, comprend des moyens pour générer une requête de lecture d'un document, à destination des moyens serveurs de documents, cette requête de lecture incluant la référence d'un document à lire, et pouvant inclure en outre une information de choix de navigation. Cette information de choix de navigation est déterminée selon l'invention à partir des données de navigation associées au document, et indique une sous-partie du document, choisie par l'utilisateur du terminal considéré et à partir de laquelle la lecture du document doit être déclenchée (par le serveur de streaming). Dans le contexte des livres numériques audio, une sous-partie choisie peut être, par exemple, le numéro d'un chapitre et celui d'un paragraphe particulier du chapitre.

En pratique, l'information de choix de navigation contenue dans une requête de lecture, inclut la valeur de l'index de lecture du document, correspondant à la sous-partie choisie du document. Cette valeur d'index est déterminée par l'interface de lecture elle-même du terminal considéré, à partir des données de navigation du document.

Selon une variante de réalisation, la valeur de l'index de lecture du document, qui correspond à la sous-partie choisie du document, est déterminée par le serveur de streaming après réception de la requête de lecture, à partir de l'information de choix de navigation contenue dans la requête.

Toujours en relation avec la figure 1, on va à présent décrire un exemple de mise ne oeuvre d'un procédé de lecture d'un contenu multimédia par un terminal IP selon l'architecture représentée sur cette figure et décrite supra.

Comme représenté à la figure 1, à l'étape E1, l'utilisateur 40 du terminal 30 se connecte, via le navigateur web 31, au site Internet (ou site web) hébergé par le serveur de gestion 13. A cette fin, il doit d'abord, de manière classique, entrer un nom d'utilisateur (login) et un mot de passe (authentification) pour accéder au service de diffusion de documents.

A l'étape E2, le navigateur 31 transmets alors une requête d'authentification à destination du serveur de gestion 13 qui, à la réception de la requête, effectue les vérifications nécessaires concernant l'existence d'un compte utilisateur et les droits associés pour l'utilisateur identifié, en consultant la base de données d'utilisateurs 14.

A l'étape E3, le serveur de gestion 13 crée une session associée à cet utilisateur et au terminal utilisé 30, puis à l'étape E4, envoie à destination du terminal une réponse contenant les données utiles pour l'affichage dans le terminal d'un espace personnel associé à l'utilisateur, ainsi que des informations relatives aux contenus multimédias pour lesquels l'utilisateur possède des droits de lecture, ces informations comprenant, le cas échéant, l'état d'avancement de lecture précédentes de ces documents (dernière valeur d'index lue ou valeur d'index correspondant à un signet électronique).

A l'étape E5, l'utilisateur 40 consulte à l'écran la liste des documents disponibles et les informations fournies par son espace personnel, et sélectionne, par une action spécifique (clavier, souris), le titre d'un document. Le navigateur web 31 transmet alors, à l'étape E6, une requête de lecture au serveur de gestion, cette requête ayant comme paramètres le titre du document choisi, les paramètres de la session de lecture, ainsi que le type de terminal et de connexion utilisés.

Le serveur de gestion 13 vérifie alors les droits de lecture de l'utilisateur vis-à-vis du titre demandé et récupère le contexte de lecture relatif à ce document et à cet utilisateur (valeur d'index de lecture, signet électronique, etc.), en consultant à nouveau la base de données 14.

A l'étape E7, Le serveur de gestion répond alors à la requête de lecture, en envoyant au terminal 30, une réponse contenant une adresse URL permettant d'obtenir le document demandé auprès du serveur de streaming 12. Cette URL est du type suivant :
*rfsp:*//*nom_du_serveur_de_streaming:port*/*nom_du_contenu.mp4*/*sessionId=ma_ session*/*DESCRIBE=index_de_debut_de_lecoute.*

Lorsque le navigateur web 31 du terminal reçoit la réponse précitée, une commande contenue dans la réponse a pour effet, selon l'exemple de réalisation illustré, de déclencher, d'une part, l'ouverture (étape E8) d'un lecteur multimédia 32 (*player* en anglais) de flux de données en mode streaming, et d'autre part, l'exécution, par le lecteur multimédia 32, de l'URL contenue dans la réponse reçue du serveur de gestion. L'exécution de l'URL précitée par le lecteur 32 a pour effet l'envoi (étape E9) d'une requête de lecture en mode streaming du document identifié dans l'adresse URL, à destination du serveur de streaming 12.

Dans cet exemple, le lecteur multimédia 32 est un plug-in du navigateur web 31, c'est-à-dire un logiciel d'application complémentaire qui, associé à un navigateur Web, entre automatiquement en action en présence d'un objet multimédia (ici contenu dans la réponse E7 du serveur de gestion), et ce, sans que l'utilisateur ait à intervenir.

Ensuite, le serveur de streaming 12 reçoit et traite la requête en provenance du lecteur multimédia et envoie à son tour une requête (étape E10) à destination du serveur de gestion afin de vérifier à nouveau les droits de l'utilisateur concernant le document demandé. En réponse, le serveur de gestion 13 consulte la base de données d'utilisateurs 14 et envoie (étape E11) une réponse au serveur de streaming 12, confirmant la validité des droits de l'utilisateur.

Dans un mode de réalisation où la(les) valeur(s) d'index de lecture mémorisées dans la base de données 14, ne sont pas transmises au terminal utilisateur 30 dans la réponse envoyée par le serveur de gestion à l'étape E7, ces valeurs d'index sont fournies par le serveur de gestion au serveur de streaming, à l'étape E11.

A l'étape E12, le serveur de streaming obtient le document demandé par l'utilisateur auprès du serveur de contenus 11. Enfin, à l'étape E13, le serveur de streaming transmet le document à destination du terminal utilisateur 30.

Comme mentionné précédemment, au cours de la transmission du document au terminal utilisateur, le serveur de streaming envoie à intervalles de temps réguliers, la valeur d'index courante du document au serveur 13 de gestion, pour que ce dernier effectue la mise à jour de la valeur d'index mémorisée dans la base de données 14 d'utilisateurs, pour l'utilisateur et le document concernés.

La **figure 2** illustre des exemples d'interaction entre l'utilisateur d'un terminal IP et un contenu multimédia en cours de chargement en mode streaming dans le terminal, selon l'architecture décrite plus haut en liaison avec la figure 1.

Selon un premier exemple d'interaction au cours d'une session de lecture d'un document, l'utilisateur 40 souhaite la reprise de la lecture du document depuis le début du chapitre en cours de lecture. A cette fin, à l'étape E21, il active une commande dédiée de l'interface de lecture, ce qui a pour effet la génération (E22) d'une requête de lecture comportant l'information de choix de navigation correspondante.

Comme mentionné plus haut, cette information de choix de navigation inclut la valeur d'index de lecture du début du chapitre désiré, si la valeur d'index est déterminée dans l'interface utilisateur à partir des données de navigation transmises avec le document en cours. Ou bien, cette valeur d'index de lecture est déterminée par le serveur de streaming 12 après réception de la requête de lecture, par une requête spécifique envoyée au serveur de gestion 13.

La requête de lecture est alors transmise (étape E23) au serveur de streaming 12, qui la traite et transmet à nouveau le document en cours, depuis le début du chapitre demandé (étape E24).

Selon un second exemple d'interaction, l'utilisateur 40 souhaite l'arrêt de la lecture d'un document en cours. Dans ce but, il active (étape E25) la commande dédiée de l'interface de lecture 32. Une requête d'interruption de lecture est lors générée (étape E22) par l'interface de lecture, et cette requête est envoyée (étape E26) au serveur de streaming 12.

A la réception de la requête d'interruption, le serveur de streaming interprète la requête et stoppe (E27) la transmission du flux en mode streaming correspondant à la session utilisateur identifiée dans la requête. Le module de détermination d'index du serveur de streaming récupère la valeur d'index de la dernière portion du document transmise avant l'interruption, et envoie (étape E28) cette valeur au serveur de gestion 13.

A l'étape E29, le serveur de gestion ferme la session utilisateur concernée, puis effectue (étape E30) la mise à jour dans la base de données 14 d'utilisateurs, des informations d'index qui correspondent à l'utilisateur et au document concernés, avec la valeur d'index d'interruption reçue du serveur de streaming.

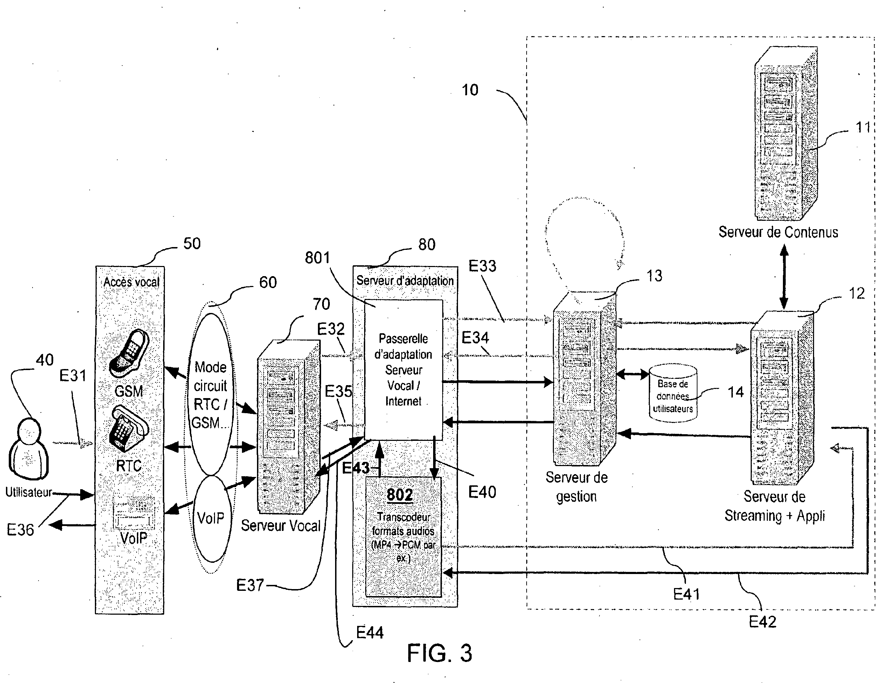

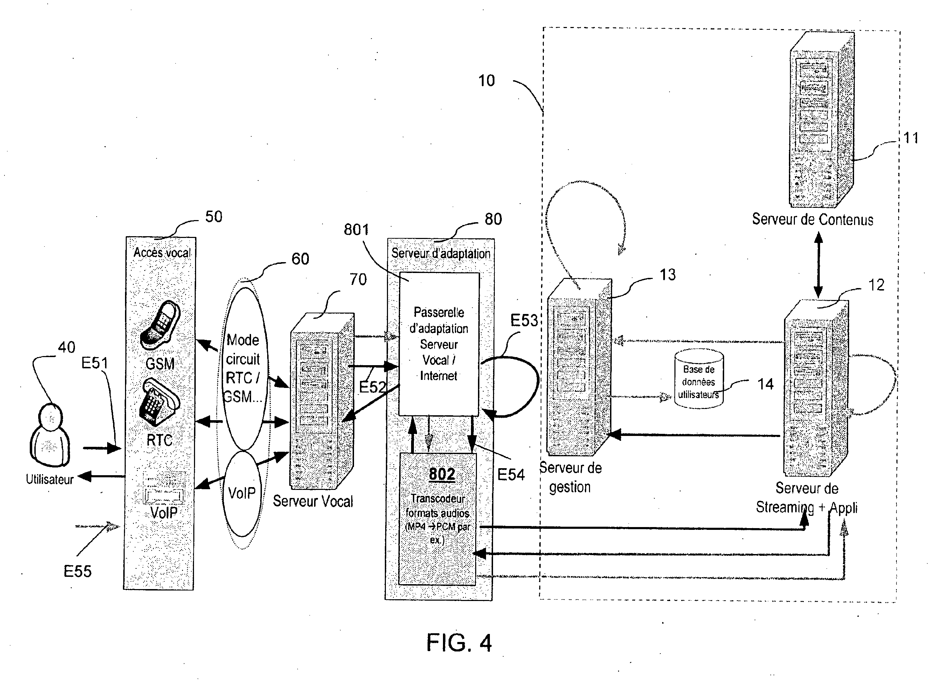

Les **figures 3** **et** **4** illustrent un second mode de réalisation de l'invention, dans lequel les terminaux utilisateurs sont des terminaux de type téléphonique à accès vocal.

On entend par terminal de type téléphonique à accès vocal, tout terminal téléphonique permettant d'accéder à un réseau de télécommunications en mode vocal. Ainsi, parmi de tels terminaux, on inclut les téléphones résidentiels, les téléphones publics (réseau de type RTC), les téléphones mobiles ou cellulaires (réseau de type GSM), et les téléphones IP fixes ou mobiles (voix sur IP, VoIP). De manière générale, de tels terminaux disposent d'une capacité mémoire limitée et possèdent des moyens d'entrée/sortie utilisateurs généralement constitués d'un clavier, d'un haut-parleur et d'un microphone.

A la **figure 3**, l'utilisateur 40 utilise un tel terminal 50 à accès vocal, connecté au réseau de télécommunications 60 correspondant. Dans ce mode de réalisation, le système de lecture de documents numériques multimédias selon l'invention comprend, outre les éléments du serveur 10 de document décrits précédemment en liaison avec les figures 1 et 2, d'une part un serveur vocal 70 accessible sur le réseau 60, et constituant l'interface de lecture du terminal utilisateur.

D'autre part, le système de lecture comprend un serveur d'adaptation 80, assurant l'interconnexion entre le serveur vocal et le réseau de type Internet (non représenté ici) auquel est relié le serveur 10 de documents multimédias. Ce serveur d'adaptation a pour fonction d'assurer l'adaptation des échanges selon les protocoles de communication respectifs utilisés, entre le serveur vocal 70 sur le réseau de téléphonie 60, et le serveur 10 de documents, sur le réseau de type Internet considéré.

Le serveur d'adaptation se substitue ainsi à la fois au navigateur Internet 31 et au lecteur multimédia 32 représentés aux figures 1 et 2, afin de formater et d'interpréter les requêtes des serveurs de gestion (13) et de streaming (12), d'une façon transparente pour ces serveurs. Plus précisément, le serveur d'adaptation 80 comprend d'une part une passerelle d'adaptation 801, destinée à interpréter et adapter les requêtes/commandes transmises dans le sens serveur vocal 70 vers serveur 10 de documents et dans le sens inverse ; et d'autre part un transcodeur 802, chargé d'interpréter et convertir les flux de données transmis entre les entités précitées (70, 10) en un format de données utilisé par l'entité destinataire. Par exemple, le transcodeur 802, est capable de convertir un flux MP4 (MPEG-Layer-4 Audio) en mode streaming transmis par le serveur de streaming 12, en flux de données vocales au format PCM (Pulse-Code Modulation) accepté par le serveur vocal 70.

Le fonctionnement du système de fourniture de documents selon ce mode de réalisation va à présent être décrit. Le fonctionnement du système concernant le traitement des requêtes au sein du serveur de documents 10, ne sera pas détaillé ici, puisqu'il est identique à celui décrit en relation avec les figures 1 et 2.

Concernant d'abord le processus général de lecture d'un document, à la figure 3, l'utilisateur 40 accède (étape E31) au service de diffusion de documents en composant (via un clavier par exemple) le numéro du serveur vocal 70 permettant d'accéder au service de fourniture de documents selon l'invention. En réponse, l'utilisateur est invité à s'authentifier, par exemple en appuyant sur une touche DTMF ou par reconnaissance vocale.

A l'étape E32, le serveur vocal 70 transfert la requête d'authentification reçue du terminal utilisateur 50 à la passerelle d'adaptation 801 qui ré achemine (étape E33) la requête vers le serveur de gestion 13. A l'étape E34, la passerelle d'adaptation reçoit du serveur de gestion la réponse validant l'authentification de l'utilisateur. Cette réponse contient les informations sur les droits de l'utilisateur authentifié (liste de documents accessibles, valeurs d'index de lecture, signets, etc.). La passerelle d'adaptation interprète le contenu de la réponse précitée puis transmet (étape E35) au serveur vocal 70 des instructions de vocalisation des informations concernant la session de l'utilisateur (liste de titres de documents, données de navigation).

A l'étape E36, l'utilisateur effectue un choix de document avec le cas échéant un choix de navigation, soit vocalement soit par l'intermédiaire du clavier du terminal, le terminal envoie alors la requête de lecture correspondante au serveur vocal 70, qui transfert (étape E37) à son tour la requête à la passerelle d'adaptation 801. Cette dernière adapte puis transmet (étape E40) la requête de lecture au transcodeur 812 qui l'envoie à son tour (étape E41) au serveur de streaming 12.

Le serveur de streaming 12 récupère le document demandé et transfert (étape E42) le flux streaming audio correspondant (flux basé sur le protocole IP) au transcodeur 802. Enfin, le transcodeur 802 convertit (MP4 vers PCM par ex.) en temps réel le flux streaming IP en flux binaire audio, et le transmet (étape E43) à la passerelle d'adaptation 801. A son tour, La passerelle d'adaptation transmet (E44) le flux binaire audio sur un lien synchrone au serveur vocal interactif 70, qui le transforme en signal audio à destination du terminal utilisateur 50.

L'utilisateur peut alors interagir avec le contenu du document via son terminal utilisateur, comme exposé ci-après en relation avec la figure 4.

La **figure 4** illustre des exemples d'interaction entre l'utilisateur d'un terminal d'accès vocal et un contenu multimédia obtenu via un serveur vocal, comme décrit ci-dessus.

Selon un premier exemple d'interaction au cours d'une session de lecture d'un document, l'utilisateur 40 souhaite la reprise de la lecture du document depuis le début du chapitre en cours de lecture. A cette fin, à l'étape E51, l'utilisateur appuie sur une touche du clavier ou prononce une commande vocale.

A réception du signal de commande de l'utilisateur, le serveur vocal 70 génère, puis transfert (étape E52) à la passerelle d'adaptation 801 une requête de lecture comportant l'information de choix de navigation correspondante.

La passerelle d'adaptation 801 formate alors la requête à l'étape E53, puis transfert la requête formatée au transcodeur 802, à l'étape E54. Le transcodeur 802 transmet alors la requête au serveur de streaming 12, via le réseau Internet. La suite du processus est conforme aux étapes E42-E44 décrites plus haut en liaison avec la figure 3.

Selon un second exemple d'interaction, l'utilisateur 40 souhaite l'arrêt de la lecture d'un document en cours. Dans ce but, à l'étape E55, il active la commande dédiée à l'arrêt de lecture : par exemple, par appui d'une touche spécifique du clavier de son terminal (touche DTMF), ou par commande vocale, ou encore en raccrochant le combiné de son terminal téléphonique.

A réception du signal de commande activé par l'utilisateur, le serveur vocal 70 génère puis transfert (étape E52), à la passerelle d'adaptation 801, une requête d'interruption de lecture. La passerelle d'adaptation 801 formate alors la requête à l'étape E53, puis transfert la requête formatée au transcodeur 802, à l'étape E54. Le transcodeur 802 transmet alors la requête au serveur de streaming 12, via le réseau Internet. La suite du processus est conforme aux étapes E27-E30 décrites plus haut en liaison avec la figure 2.

On notera ici que la présente description ne concerne que des exemples non limitatifs de mise en oeuvre de l'invention. En effet, selon des variantes possibles de réalisation de l'invention, dans un terminal de type IP (figures 1 et 2), le lecteur multimédia 32 peut être intégré au navigateur Internet 31, grâce à des mécanismes de type ActiveX par exemple. D'autre part, le serveur de contenus 11 peut être intégré dans le serveur de streaming 12. De même, les fonctions du serveur de gestion 13 peuvent être intégrées au serveur de streaming 12. Enfin, les fonctions du serveur de streaming qui sont spécifiques à l'invention, peuvent être transférées dans le serveur de gestion, de manière à permettre à ce dernier de pouvoir fonctionner avec n'importe quel serveur de streaming standard.

## Revendications

1. Système de fourniture de documents multimédias numériques sur un réseau de télécommunications, comprenant des moyens (10) serveurs de documents, adaptés à fournir en mode de diffusion sans téléchargement de tels documents à des terminaux (30) d'utilisateurs connectés au réseau (20) et comprenant chacun une interface (32) de lecture adaptée à lire en temps réel des documents multimédias numériques, le système étant **caractérisé en ce que** les moyens (10) serveurs de documents incluent :
- un serveur (11) de contenus multimédias, contenant un ensemble de documents multimédias numériques, chaque document étant associé à un index de lecture dont chaque valeur repère une portion prédéterminée du document ;
- des moyens (12) de détermination d'index, pour déterminer au cours de la transmission vers un terminal utilisateur d'un document quelconque du serveur de contenus, au moins une valeur de l'index de lecture associé au document, chaque valeur d'index déterminée, correspondant à la portion du document en cours de transmission à l'instant de la détermination de cette valeur d'index ;
- des moyens de mémorisation, pour mémoriser au moins la dernière valeur d'index déterminée au cours de la transmission d'un document quelconque vers un terminal utilisateur ;
- des moyens (12) de déclenchement de transmission, pour déclencher la transmission d'un document quelconque du serveur de contenus, vers un terminal utilisateur quelconque, depuis une portion dudit document repérée à partir d'une valeur d'index de lecture mémorisée dans lesdits moyens de mémorisation.

2. Système selon la revendication 1, dans lequel les moyens serveurs incluent en outre une base de données (14) d'utilisateurs, contenant, pour chaque utilisateur, des informations d'utilisateurs incluant la liste des références de tous les documents pour lesquels l'utilisateur considéré a des droits de lecture, et pour chaque référence de document de ladite liste, au moins une valeur d'index de lecture correspondant à la portion du document qui était en cours de transmission au moment de la dernière interruption de lecture dudit document pour l'utilisateur considéré ; lesdits moyens de déclenchement de transmission étant aptes à déclencher la transmission d'un document quelconque du serveur de contenus, vers un terminal utilisateur, depuis une portion dudit document repérée par une telle valeur d'index de lecture mémorisée dans la base de données d'utilisateurs, pour l'utilisateur et le document considérés.

3. Système selon la revendication 2, dans lequel lesdits moyens serveurs incluent des moyens de mise à jour périodique de la valeur d'index associée à un document quelconque du serveur de contenus, cette mise à jour ayant lieu à intervalles de temps au cours de la transmission du document vers un terminal utilisateur.

4. Système selon l'une des revendications 1, 2 ou 3, dans lequel l'index de lecture associé à un document quelconque du serveur de contenus, inclut des données de navigation décrivant l'organisation du contenu dudit document en un ensemble prédéfini de sous-parties, l'interface de lecture équipant chaque terminal utilisateur, comprenant:
- des moyens pour traiter et présenter à l'utilisateur lesdites données de navigation associées à un document donné du serveur de contenus ;
- des moyens pour générer une requête de lecture d'un document, à destination des moyens serveurs de documents, la requête de lecture incluant la référence d'un document à lire, et pouvant inclure en outre une information de choix de navigation, déterminée à partir des données de navigation associées au document, ladite information de choix de navigation indiquant une sous-partie du document, choisie par l'utilisateur du terminal considéré et à partir de laquelle la lecture du document doit être déclenchée.

5. Système selon la revendication 4, dans lequel l'information de choix de navigation contenue dans une requête de lecture inclut la valeur de l'index de lecture du document, correspondant à la sous-partie choisie du document, ladite valeur d'index étant déterminée par l'interface de lecture du terminal considéré à partir des données de navigation du document.

6. Système selon la revendication 4, dans lequel lesdits moyens de détermination d'index inclus dans les moyens serveurs de documents, sont aptes à déterminer, à partir de ladite information de choix de navigation contenue dans une requête de lecture d'un document, la valeur de l'index de lecture du document, qui correspond à la sous-partie choisie du document.

7. Système selon l'une quelconque des revendications précédentes, dans lequel ledit index de lecture associé à un document du serveur de contenus, comprend un index temporel adapté à mesurer la durée de transmission écoulée depuis le début d'un document, une valeur de l'index temporel correspondant à une valeur numérique exprimée dans une unité de temps prédéfinie.

8. Système selon la revendication 7, dans lequel certaines valeurs de l'index de lecture sont associées à des balises indiquant le début d'une sous-partie prédéfinie du document auquel est associé l'index.

9. Système selon l'une quelconque des revendications précédentes, dans lequel un terminal utilisateur quelconque est un terminal de type IP.

10. Système selon l'une quelconque des revendications précédentes, dans lequel un terminal utilisateur quelconque est un terminal de type téléphonique à accès vocal, connecté à un réseau de téléphonie, ledit système comprenant en outre :
- un serveur vocal, constituant l'interface de lecture du terminal utilisateur et étant accessible sur le réseau de téléphonie ; et
- un serveur d'adaptation assurant l'interconnexion entre ledit serveur vocal et un réseau de type Internet auquel sont reliés lesdits moyens serveurs de documents multimédias, pour assurer l'adaptation des échanges selon les protocoles de communication respectifs utilisés, entre le serveur vocal sur le réseau de téléphonie et les moyens serveurs de documents sur le réseau de type Internet.

11. Système selon l'une quelconque des revendications précédentes, dans lequel les documents du serveur de contenus sont des livres audio numériques, le contenu de chaque document étant organisé en un ensemble de sous-parties du type défini par l'organisation caractéristique du contenu d'un livre papier.

12. Terminal utilisateur connectable à un réseau de télécommunications, **caractérisé en ce qu'**il comprend une interface de lecture adaptée à l'utilisation dudit terminal dans un système de fourniture de documents selon l'une quelconque des revendications 1 à 11, ladite interface comprenant :
- des moyens pour traiter et présenter à l'utilisateur des données de navigation associées à un document donné du serveur de contenus ;
- des moyens pour générer une requête de lecture d'un document, à destination des moyens serveurs de documents, la requête de lecture incluant la référence d'un document à lire, et pouvant inclure en outre une information de choix de navigation déterminée à partir des données de navigation associées au document, ladite information de choix indiquant une sous-partie du document choisie par l'utilisateur du terminal considéré, et à partir de laquelle la lecture du document doit être déclenchée.

13. Procédé de lecture en temps réel d'un document numérique multimédia par un terminal utilisateur, le document étant fourni par un système de fourniture de documents multimédias numériques en conformité avec l'une quelconque des revendications 1 à 11, le procédé étant **caractérisé en ce qu'**il comporte les étapes suivantes :
- sélection d'un document à lire dans le terminal utilisateur ;
- obtention de données de navigation associées au document sélectionné ;
- sélection d'une sous-partie du document en fonction desdites données de navigation et génération d'une information de choix de navigation représentant la sous-partie sélectionnée ;
- création d'une requête de lecture incluant la référence du document sélectionné pour la lecture et ladite information de choix de navigation, et envoi de la requête aux moyens serveurs de documents sur le réseau ;
- réception du document sélectionné, depuis la sous-partie dudit document déterminée par les moyens serveurs de documents à partir de ladite information de choix de navigation, et lecture simultanée du document.

## Claims

1. System for supplying digital multimedia documents over a telecommunication network, comprising document server means (10), suitable for streaming such documents to terminals (30) of users connected to the network (20) and each comprising a playback interface (32) suitable for playing back digital multimedia documents in real time, the system being **characterized in that** the document server means (10) include:
- a multimedia content server (11), containing a set of digital multimedia documents, each document being associated with a playback index, each value of which identifies a predetermined portion of the document;
- index determination means (12), for determining, during the transmission of any document to a user terminal from the content server, at least one value of the playback index associated with the document, each determined index value corresponding to the portion of the document currently being transmitted at the time of the determination of this index value;
- storage means, for storing at least the last index value determined during the transmission of any document to a user terminal;
- transmission initiation means (12), for initiating the transmission of any document from the content server, to any user terminal, from a portion of said document identified on the basis of a playback index value stored in said storage means.

2. System according to Claim 1, in which the server means further include a user database (14), containing, for each user, user information including the list of the references of all the documents for which the user concerned has playback rights, and, for each document reference in said list, at least one playback index value corresponding to the portion of the document that was being transmitted at the moment when said document for the user concerned was last interrupted; said transmission initiation means being able to initiate the transmission of any document from the content server, to a user terminal, from a portion of said document identified by such a playback index value stored in the user database, for the user and the document concerned.

3. System according to Claim 2, in which said server means include means of periodically updating the index value associated with any document in the content server, this update taking place at time intervals during the transmission of the document to a user terminal.

4. System according to one of Claims 1, 2 and 3, in which the playback index associated with any document in the content server includes navigation data describing the organization of the content of said document in a predefined set of subparts, the playback interface with which each user terminal is equipped comprising:
- means for processing and presenting to the user said navigation data associated with a given document in the content server;
- means for generating a request to play back a document, addressed to the document server means, the playback request including the reference of a document to be played back, and possibly also including a navigation choice indication, determined on the basis of the navigation data associated with the document, said navigation choice indication indicating a subpart of the document, chosen by the user of the terminal concerned and from which the playback of the document must be initiated.

5. System according to Claim 4, in which the navigation choice indication contained in a playback request includes the document's playback index value, corresponding to the chosen subpart of the document, said index value being determined by the playback interface of the terminal concerned on the basis of the document's navigation data.

6. System according to Claim 4, in which said index determination means included in the document server means are able to determine, from said navigation choice indication contained in a request to play back a document, the value of the document's playback index, which corresponds to the chosen subpart of the document.

7. System according to any one of the preceding claims, in which said playback index associated with a document in the content server comprises a time index suitable for measuring the elapsed transmission time since the start of a document, a value of the time index corresponding to a numerical value expressed in a predefined time unit.

8. System according to Claim 7, in which certain playback index values are associated with markers indicating the start of a predefined subpart of the document with which the index is associated.

9. System according to any one of the preceding claims, in which any user terminal is an IP type terminal.

10. System according to any one of the preceding claims, in which any user terminal is a voice-accessed telephone type terminal, connected to a telephony network, said system also comprising:
- a voice server, constituting the playback interface of the user terminal and being accessible over the telephony network; and
- a matching server handling the interconnection between said voice server and an internet-type network to which said multimedia document server means are linked, to handle the matching of the interchanges according to the respective communication protocols used, between the voice server on the telephony network and the document server means on the internet-type network.

11. System according to any one of the preceding claims, in which the documents in the content server are digital audio books, the content of each document being organized in a set of subparts of the type defined by the characteristic organization of the content of a printed book.

12. User terminal that can be connected to a telecommunication network, **characterized in that** it comprises a playback interface suitable for use by said terminal in a system supplying documents according to any one of Claims 1 to 11, said interface comprising:
- means for processing and presenting to the user navigation data associated with a given document in the content server;
- means for generating a request to play back a document, addressed to the document server means, the playback request including the reference of a document to be played back, and possibly also including a navigation choice indication determined on the basis of the navigation data associated with the document, said choice indication indicating a subpart of the document chosen by the user of the terminal concerned, and from which the playback of the document must be initiated.

13. Real-time playback method for a multimedia digital document by a user terminal, the document being supplied by a system for supplying digital multimedia documents in accordance with any one of Claims 1 to 11, the method being **characterized in that** it comprises the following steps:
- selecting a document to be played back in the user terminal;
- obtaining navigation data associated with the selected document;
- selecting a subpart of the document according to said navigation data and generating a navigation choice indication representing the selected subpart;
- creating a playback request including the reference of the document selected for playback and said navigation choice indication, and sending the request to the document server means over the network;
- receiving the selected document, from the subpart of said document determined by the document server means from said navigation choice indication, and simultaneously playing back the document.

## Patentansprüche

1. System zum Liefern von digitalen Multimedia-Dokumenten über ein Telekommunikationsnetzwerk, das Dokumentserver-Einrichtungen (10) enthält, die geeignet sind, um im Modus der Verbreitung ohne Herunterladen solche Dokumente an Endgeräte (30) von Benutzern zu liefern, die mit dem Netz (20) verbunden sind und je eine Leseschnittstelle (32) enthalten, die in Echtzeit digitale Multimedia-Dokumente lesen kann, wobei das System **dadurch gekennzeichnet ist, dass** die Dokumentserver-Einrichtungen (10) umfassen:
- einen Multimediainhalt-Server (11), der eine Einheit von digitalen Multimedia-Dokumenten enthält, wobei jedes Dokument einem Leseindex zugeordnet ist, von dem jeder Wert einen vorbestimmten Abschnitt des Dokuments markiert;
- Indexbestimmungseinrichtungen (12), um während der Übertragung eines beliebigen Dokuments des Inhaltservers zu einem Benutzerendgerät mindestens einen Wert des dem Dokument zugeordneten Leseindex zu bestimmen, wobei jeder bestimmte Indexwert dem Abschnitt des Dokuments entspricht, der im Augenblick der Bestimmung dieses Indexwerts gerade übertragen wird;
- Speichereinrichtungen, um mindestens den letzten während der Übertragung eines beliebigen Dokuments an ein Benutzerendgerät bestimmten Indexwert zu speichern;
- Einrichtungen (12) zum Auslösen der Übertragung, um die Übertragung eines beliebigen Dokuments vom Inhaltserver an ein beliebiges Benutzerendgerät ab einem ausgehend von einem in den Speichereinrichtungen gespeicherten Leseindexwert markierten Abschnitt des Dokuments auszulösen.

2. System nach Anspruch 1, bei dem die Servereinrichtungen außerdem eine Benutzerdatenbank (14) umfassen, die für jeden Benutzer Benutzerinformationen enthält, die die Liste der Referenzen aller Dokumente, für die der betroffene Benutzer Leserechte hat, und für jede Dokumentreferenz der Liste mindestens einen Leseindexwert umfassen, der dem Abschnitt des Dokuments entspricht, der zum Zeitpunkt der letzten Leseunterbrechung des Dokuments für den betroffenen Benutzer gerade übertragen wurde; wobei die Übertragungsauslöseeinrichtungen die Übertragung eines beliebigen Dokuments des Inhaltservers an ein Benutzerendgerät ab einem Abschnitt des Dokuments auslösen können, der durch einen solchen in der Benutzerdatenbank für den betroffenen Benutzer und das betroffene Dokument gespeicherten Leseindexwert markiert ist.

3. System nach Anspruch 2, bei dem die Servereinrichtungen Einrichtungen zur periodischen Aktualisierung des Indexwerts umfassen, der einem beliebigen Dokument des Inhaltservers zugeordnet ist, wobei diese Aktualisierung in Zeitabständen während der Übertragung des Dokuments an ein Benutzerendgerät stattfindet.

4. System nach einem der Ansprüche 1, 2 oder 3, bei dem der einem beliebigen Dokument des Inhaltservers zugeordnete Leseindex Navigationsdaten umfasst, die die Organisation des Inhalts des Dokuments in einer vordefinierten Einheit von Unterbereichen beschreiben, wobei die jedes Benutzerendgerät bestückende Leseschnittstelle enthält:
- Einrichtungen, um die einem gegebenen Dokument des Inhaltservers zugeordneten Navigationsdaten zu verarbeiten und dem Benutzer zu präsentieren;
- Einrichtungen, um eine Leseanforderung eines Dokuments an Dokument-Servereinrichtungen zu erzeugen, wobei die Leseanforderung die Referenz eines zu lesenden Dokuments umfasst und außerdem eine Navigationswahlinformation umfassen kann, die ausgehend von den dem Dokument zugeordneten Navigationsdaten bestimmt wird, wobei die Navigationswahlinformation einen Unterbereich des Dokuments anzeigt, der vom Benutzer des betroffenen Endgeräts ausgewählt wird und von dem ausgehend das Lesen des Dokuments ausgelöst werden soll.

5. System nach Anspruch 4, bei dem die in einer Leseanforderung enthaltene Navigationswahlinformation den Leseindexwert des Dokuments umfasst, der dem gewählten Unterbereich des Dokuments entspricht, wobei der Indexwert von der Leseschnittstelle des betroffenen Endgeräts ausgehend von den Navigationsdaten des Dokuments bestimmt wird.

6. System nach Anspruch 4, bei dem die in den Dokument-Servereinrichtungen enthaltenen Einrichtungen zur Indexbestimmung ausgehend von der in einer Leseanforderung eines Dokuments enthaltenen Navigationswahlinformation den Leseindexwert des Dokuments bestimmen können, der dem gewählten Unterbereich des Dokuments entspricht.

7. System nach einem der vorhergehenden Ansprüche, bei dem der einem Dokument des Inhaltservers zugeordnete Leseindex einen zeitlichen Index enthält, der geeignet ist, um die Übertragungsdauer zu messen, die seit dem Beginn eines Dokuments vergangen ist, wobei ein Wert des zeitlichen Index einem digitalen Wert entspricht, der in einer vordefinierten Zeiteinheit ausgedrückt ist.

8. System nach Anspruch 7, bei dem bestimmte Leseindexwerte Markern zugeordnet sind, die den Anfang eines vordefinierten Unterbereichs des Dokuments bezeichnen, dem der Index zugeordnet ist.

9. System nach einem der vorhergehenden Ansprüche, bei dem ein beliebiges Benutzerendgerät ein Endgerät vom Typ IP ist.

10. System nach einem der vorhergehenden Ansprüche, bei dem beliebiges Benutzerendgerät ein Endgerät vom telefonischen Typ mit Sprachzugang ist, das mit einem Telefonnetz verbunden ist, wobei das System außerdem enthält:
- einen Sprachserver, der die Leseschnittstelle des Benutzerendgeräts bildet und im Telefonnetz zugänglich ist; und
- einen Anpassungsserver, der die Verbindung zwischen dem Sprachserver und einem Netzwerk vom Typ Internet gewährleistet, mit dem die Servereinrichtungen von Multimedia-Dokumenten verbunden sind, um die Anpassung der Austauschvorgänge gemäß den jeweiligen verwendeten Kommunikationsprotokollen zwischen dem Sprachserver im Telefonnetz und den Dokument-Servereinrichtungen im Netz vom Typ Internet zu gewährleisten.

11. System nach einem der vorhergehenden Ansprüche, bei dem die Dokumente des Inhaltservers digitale Hörbücher sind, wobei der Inhalt jedes Dokuments in einer Einheit von Unterbereichen des von der charakteristischen Organisation des Inhalts eines gedruckten Buchs definierten Typs organisiert ist.

12. Benutzerendgerät, das mit einem Telekommunikationsnetz verbunden werden kann, **dadurch gekennzeichnet, dass** es eine Leseschnittstelle enthält, die für die Verwendung des Endgeräts in einem System zum Liefern von Dokumenten nach einem der Ansprüche 1 bis 11 geeignet ist, wobei die Schnittstelle enthält:
- Einrichtungen, um einem gegebenen Dokument des Inhaltservers zugeordnete Navigationsdaten zu verarbeiten und dem Benutzer zu präsentieren;
- Einrichtungen, um eine Leseanforderung eines Dokuments an Dokument-Servereinrichtungen zu erzeugen, wobei die Leseanforderung die Referenz eines zu lesenden Dokuments umfasst und außerdem eine Navigationswahlinformation umfassen kann, die ausgehend von den dem Dokument zugeordneten Navigationsdaten bestimmt wird, wobei die Wahlinformation einen Unterbereich des Dokuments anzeigt, der vom Benutzer des betroffenen Endgeräts gewählt wird, und ausgehend von dem das Lesen des Dokument ausgelöst werden soll.

13. Verfahren zum Lesen in Echtzeit eines digitalen Multimedia-Dokuments durch ein Benutzerendgerät, wobei das Dokument von einem System zur Bereitstellung von digitalen Multimedia-Dokumenten nach einem der Ansprüche 1 bis 11 bereitgestellt wird, wobei das Verfahren **dadurch gekennzeichnet ist, dass** es die folgenden Schritte aufweist:
- Auswahl eines im Benutzerendgerät zu lesenden Dokuments;
- Erhalt von dem ausgewählten Dokument zugeordneten Navigationsdaten;
- Auswahl eines Unterbereichs des Dokuments in Abhängigkeit von den Navigationsdaten und Erzeugung einer Navigationswahlinformation, die den ausgewählten Unterbereich darstellt;
- Erzeugung einer Leseanforderung, die die Referenz des zum Lesen ausgewählten Dokuments und die Navigationswahlinformation umfasst, und Senden der Anforderung an die Dokument-Servereinrichtungen im Netz;
- Empfang des ausgewählten Dokuments ab dem Unterbereich des Dokuments, der von den Dokument-Servereinrichtungen ausgehend von der Navigationswahlinformation bestimmt wird, und gleichzeitiges Lesen des Dokuments.
